Europäisches Patentamt

(19) European Patent Office  (11) Publication number: **0 066 315**
Office européen des brevets  **B1**

(12)  **EUROPEAN PATENT SPECIFICATION**

(45) Date of publication of the patent specification:  (51) Int. Cl.³: **F 24 J 3/02**
04.04.84

(21) Application number: **82200566.6**

(22) Date of filing: **11.05.82**

(54) Heat-transport device suitable for use in a solar collector.

(30) Priority: **20.05.81 NL 8102468**  (73) Proprietor: **N.V. Philips' Gloeilampenfabrieken,**
**Groenewoudseweg 1, NL-5621 BA Eindhoven (NL)**

(43) Date of publication of application:  (72) Inventor: **Bloem, Herman c/o INT.OCTROOIBUREAU**
**08.12.82 Bulletin 82/49**  **B.V., Prof. Holstlaan 6, NL-5656 AA Einhoven (NL)**

(45) Publication of the grant of the patent:  (74) Representative: **Melio, Jan Dirk et al, INTERNATIONAAL**
**04.04.84 Bulletin 84/14**  **OCTROOIBUREAU B.V. Prof. Holstlaan 6, NL-5656 AA**
**Eindhoven (NL)**

(84) Designated Contracting States:
**DE FR GB IT NL**

(56) References cited:
**FR - A - 2 241 053**

BUNDESDRUCKEREI BERLIN

## Heat-transport device suitable for use in a solar collector

The invention relates to a heat-transport device which is suitable for use in a solar collector and which comprises a sealed and evacuated tube which contains water as a heat-transport medium which, during operation of the device evaporates in a heated section of the tube and condenses in a cooled section of the tube, the cooled section of the tube being situated at a higher level than the heated section during operation so that the condensed water collects at the bottom of the tube.

Heat-transport devices of the kind set forth are generally known and are sometimes referred to as »heat pipes«. An example of the use of such a device in a solar collector is published in Netherlands Patent Application 7 905 057.

In this known solar collector an absorber which receives heat from incident solar radiation is suitably thermally conductively connected to the section of the heat transport device which is heated when the device is in operation. When the absorber is not exposed to radiation and the heat-transport device is therefore cold, the water contained therein lies at the bottom of the heat pipe in the liquid phase. In a practical embodiment, the water at the bottom of the pipe forms a column of from 10 to 20 cm in length. The cross-sectional area of the pipe therein amounts to 33 mm$^2$.

When the absorber receives heat from incident solar radiation, the upper section of the absorber and the heat pipe is heated much more rapidly than the section which contains the condensed water. This is due to the high specific heat of the water. This starting effect of the heat pipe occurs notably when the condenser section is cold (which means a very low pressure in the heat pipe), and often the temperature of the absorber has risen far beyond 100°C before the water starts to boil turbulently at 70 to 80°C due to the delay in boiling. Due to the reoccurence of this delay at a later stage, the operation of the heat pipe may become intermittent, which is detrimental to the overall efficiency of the device.

It is an object of the invention to provide a heat-transport device of the kind set forth which exhibits substantially no delay in boiling when it is started.

In order to achieve this object, the heat transport device in accordance with the invention is characterized in that at the area of the liquid level in the bottom of the tube when the device is not in operation, a fine-meshed gauze is attached to the inner surface of the tube wall so as to extend above and below said liquid level.

The gauze is preferably made of a material which does not react with water, for example, phosphor-bronze.

The wettability of the gauze by water should be high; this is preferably achieved by oxidation of the gauze in air.

In order to achieve a suitable capillary effect the gauze should be very fine, with mesh size which is preferably of the order of 250 mesh.

It has been found that the provision of a gauze in the tube in the described manner substantially eliminates the delay in boiling; this is probably due to the increased evaporating surface area in the heat pipe provided by the gauze, and the creation of conditions in which vapour bubbles are readily formed. The starting of the heat pipe is thus substantially facilitated and beyond 40 to 50°C no intermittent operation of the heat pipe occurs.

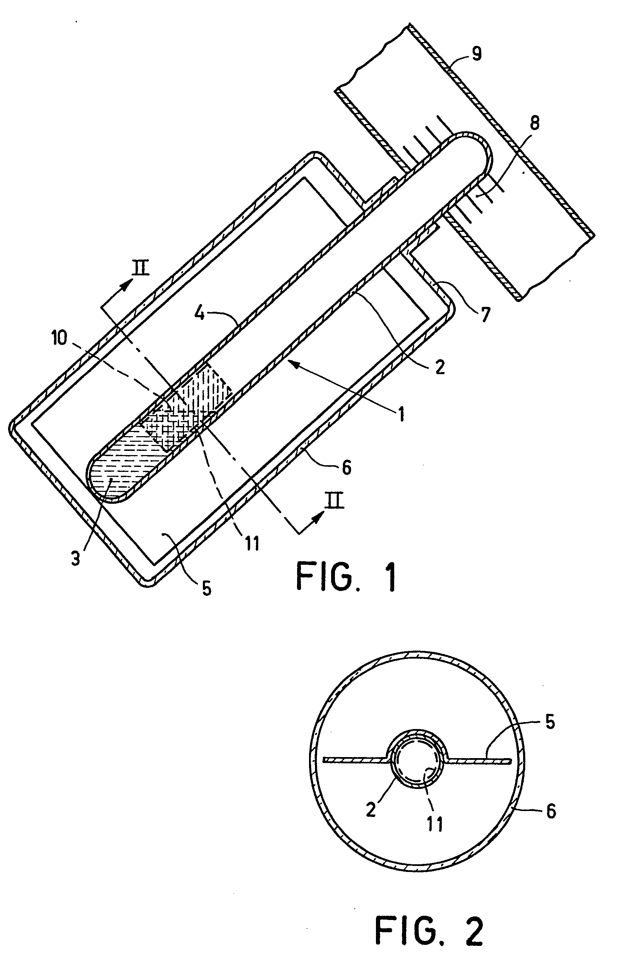

An embodiment of the invention will be described in detail hereinafter with reference to the drawings, in which Fig. 1 and 2 show, by way of example, a longitudinal sectional view and a transverse sectional view of a solar collector comprising a heat-transport device according to an embodiment of the invention.

The heat-transport device is denoted by the reference numeral 1 in Fig. 1. The device 1 mainly consists of a metal tube 2 which contains water as the heat-transport medium 3.

A section 4 of the tube 2 is in suitable thermally conductive contact with an absorber plate 5 which takes up heat when solar radiation is incident thereon. The side of the absorber plate 5 which faces the sun may comprise a selective absorption layer.

The absorber 5 and the section 4 of the tube 2 are enclosed in a transparent envelope 6.

The tube 2 passes through one end wall 7 of the cyclindrical envelope 6 and externally of the envelope has a section 8 which is arranged to exchange heat with a medium to be heated in a duct system 9.

Condensed water is present at the bottom of the tube 2 in the form of a liquid column 3. The liquid level in the bottom of the tube when the device is not in operation is denoted by the reference numeral 10. On the inner surface of the wall of the tube 2 at the area of the liquid level 10 is arranged a fine-meshed phosphor-bronze gauze 11 which has been oxidized in air before it is fitted in the tube, so that the desired wettability of the gauze by water is ensured. The gauze is of tubular form und extends above and below the liquid level 10.

When the sun heats the absorber 5 by radiation so that the temperature of the section 4 of the tube also increases, the water in the tube will start to boil without the occurrence of a substantial delay in boiling or of intermittent turbulent boiling when the section 4 has reached a temperature which coresponds to the boiling temperature of the water in the tube.

The simple, inexpensive gauze at the area of the liquid level 10 thus offers an excellent solution to the problem of delay in boiling described earlier herein.

## Claims

1. A heat-transport device (1) which is suitable for use in a solar collector and which comprises a sealed and evacuated tube (2) which contains water as a heat-transport medium (3) which, during operation of the device (1), evaporates in a heated section (4) of the tube and condenses in a cooled section (8) of the tube, the cooled section (8) of the tube (2) being situated at a higher level than the heated section (4) during operation so that the condensed water collects at the bottom of the tube (2), characterized in that at the area of the liquid level (10) in the bottom of the tube (12) when the device (1) is not in operation, a fine-meshed gauze (11) is attached to the inner surface of the tube wall so as to extend above and below said liquid level (10).

2. A heat-transport device (1) as claimed in Claim 1, characterized in that the gauze (11) is made of a material which does not react with water, for example, phosphor-bronze.

3. A heat-transport device as claimed in Claim 1 or 2, characterized in that the gauze (11) is wettable by water.

4. A heat-transport device as claimed in Claim 3, characterized in that the gauze (11) is oxidized in air.

## Patentansprüche

1. Wärmetransportvorrichtung (1), geeignet für einen Sonnenkollektor, mit einem geschlossenen und evakuiertem Rohr (2), in dem sich als Wärmetransportmedium (3) Wasser befindet, das im Betrieb der Vorrichtung in einem erwärmten Teil (4) des Rohres verdampft und in einem gekühlten Teil (8) des Rohres kondensiert, wobei im Betrieb der gekühlte Teil (8) des Rohres (2) auf einem höheren Pegel liegt als der erwärmte Teil (4), so daß das kondensierte Wasser sich unten im Rohr ansammelt, dadurch gekennzeichnet, daß im Bereich des Flüssigkeitspegels (10) unten im Rohr, wenn die Vorrichtung nicht im Betrieb ist, eine feinmaschige Gaze (11) an der inneren Fläche der Rohrwand derart angeordnet ist, daß diese sich über und unter dem genannten Flüssigkeitspegel (10) erstreckt.

2. Wärmetransportvorrichtung nach Anspruch 1, dadurch gekennzeichnet, daß die Gaze (11) aus einem Material besteht, das mit Wasser nicht reagiert, beispielsweise aus Phosphorbronze.

3. Wärmetransportvorrichtung nach Anspruch 1 oder 2, dadurch gekennzeichnet, daß die Gaze (11) durch Wasser benetzbar ist.

4. Wärmetransportvorrichtung nach Anspruch 3, dadurch gekennzeichnet, daß die Gaze (11) an der Luft oxidiert ist.

## Revendications

1. Dispositif de transport de chaleur (1) convenant notamment à un collecteur solaire et contenant un tube évacué et fermé (2) contenant de l'eau comme fluide de transport de chaleur (3) qui, lors du fonctionnement du dispositif (1), s'évapore dans une partie chauffée (4) du tube et se condense dans une partie refroidie (8) du tube (2), la partie refroidie (8) du tube (2) étant située à un niveau plus élevé que la partie chauffée (4) pendant le fonctionnement, de sorte que l'eau condensée s'accumule au fond du tube (2), caractérisé en ce que à la hauteur du niveau de liquide (10) dans le fond du tube (2) lorsque le dispositif (1) est hors de fonctionnement une toile de mailles fines (11) est appliquée sur la surface intérieure de la paroi du tube de façon à s'étendre au-dessus et au-dessous dudit niveau de liquide (10).

2. Dispositif de transport de chaleur (1) selon la revendication 1, caractérisé en ce que la toile (11) est réalisée en un matériau qui ne réagit pas avec l'eau par exemple du phosphore-bronze.

3. Dispositif de transport de chaleur selon la revendication 1 ou 2, caractérisé en ce que la toile (11) peut être mouillée par l'eau.

4. Dispositif de transport de chaleur selon la revendication 3, caractérisé en ce que la toile (11) est oxydée dans l'air.

FIG. 1

FIG. 2